Europäisches Patentamt

European Patent Office

Office européen des brevets

(11) Publication number: **0 208 434**
**B1**

(12) **EUROPEAN PATENT SPECIFICATION**

(45) Date of publication of patent specification: **26.09.90**

(51) Int. Cl.⁵: **B 01 D 53/36, B 01 J 23/89**

(21) Application number: **86304590.2**

(22) Date of filing: **16.06.86**

(54) **Process for removing nitrogen oxides and carbon monoxide simultaneously.**

(30) Priority: **17.06.85 JP 130027/85**

(43) Date of publication of application:
**14.01.87 Bulletin 87/03**

(45) Publication of the grant of the patent:
**26.09.90 Bulletin 90/39**

(84) Designated Contracting States:
**AT DE FR GB**

(56) References cited:
**DE-A-2 832 002**
**DE-A-3 431 961**
**FR-A-2 146 358**
**FR-A-2 160 905**
**FR-A-2 177 951**
**US-A-3 883 444**
**US-A-3 929 671**
**US-A-4 466 947**

(73) Proprietor: **HITACHI, LTD.**
**6, Kanda Surugadai 4-chome**
**Chiyoda-ku, Tokyo 100 (JP)**

(73) Proprietor: **BABCOCK-HITACHI KABUSHIKI**
**KAISHA**
**6-2, 2-chome, Ohtemachi Chiyoda-ku**
**Tokyo 100 (JP)**

(72) Inventor: **Kato, Akira**
**5-14 Daihara-cho 3-chome**
**Hitachi-shi Ibaraki 317 (JP)**
Inventor: **Yamashita, Hisao**
**22-7 Hanayama-cho 2-chome**
**Hitachi-shi Ibaraki 317 (JP)**
Inventor: **Kawagoshi, Hiroshi**
**1404-3 Ishinazaka-cho**
**Hitachi-shi Ibaraki 319-12 (JP)**
Inventor: **Tachi, Takahiro**
**Yuuhou-ryo, 20-3, Ayukawa-cho 6-chome**
**Hitachi-shi Ibaraki 316 (JP)**
Inventor: **Watanabe, Noriko**
**1235-24 Kasahara-cho**
**Mito-shi Ibaraki 310 (JP)**
Inventor: **Matsuda, Shinpei**
**1722-7 Shirakata Toukai-mura**
**Naka-gun Ibaraki 319-11 (JP)**

Courier Press, Leamington Spa, England.

**EP 0 208 434 B1**

(74) Representative: **Paget, Hugh Charles Edward et al**
**MEWBURN ELLIS & CO. 2/3 Cursitor Street**
**London EC4A 1BQ (GB)**

# EP 0 208 434 B1

## Description

The present invention relates to a process for removing nitrogen oxides (hereinafter referred to as $NO_x$) and carbon monoxide from exhaust gases e.g. of fixed sources such as combustion furnaces such as boilers of electric power plants and gas turbines, nitric acid plants and iron-manufacturing plants, and converting them into harmless substances in an efficient and economical manner.

Various processes have been proposed for removing $NO_x$ and CO from exhaust gases. Among them, processes for removing $NO_x$ can be classified roughly into adsorption, absorption and reduction processes. In another aspect, these processes are classified into dry and wet processes. Among them, a process wherein $NO_x$ is reduced into harmless nitrogen with a reducing gas such as ammonia, hydrogen, carbon monoxide or a hydrocarbon is employed most ordinarily. An example of a process of reducing $NO_x$ into harmless nitrogen with ammonia is disclosed in US patent No. 4,085,193.

On the other hand, examples of the processes for removing CO include absorption, adsorption and oxidation processes.

For removing $NO_x$ and CO simultaneously, a process has been proposed which comprises reacting $NO_x$ with CO directly on a catalyst to convert them into harmless nitrogen and $CO_2$, respectively, with method is disclosed in "SURFACE", Vol. 23, No. 9 (1985), pages 510—511. This process is effective to remove $NO_x$ and CO from an exhaust gas in which $O_2$ is almost not contained. However, the process has a defect that when the exhaust gas contains $O_2$, the reaction of CO with $O_2$ occurs in preference to the reaction of CO with $NO_x$ and, therefore, the amount of CO usable for reducing $NO_x$ becomes insufficient and the $NO_x$-removing capacity of the process is reduced.

Thus, the most effective conventional process for removing $NO_x$ and CO from an exhaust gas containing $O_2$ is throught to be one comprising oxidizing CO into $CO_2$ over an oxidation catalyst and then adding ammonia thereto to remove $NO_x$ by reduction carried out in the presence of a denitration catalyst. However, this process is uneconomical, since both CO-oxidation catalyst and $NO_x$-removal catalyst are necessitated.

Further, it has been difficult to effect the reduction of $NO_x$ with $NH_3$ and oxidation of CO simultaneously in the presence of only one catalyst in the prior art, since the catalyst effective for the oxidation of CO is also effective for the oxidation of $NH_3$.

An object of the present invention is to provide a process for removing CO and $NO_x$ simultaneously from an exhaust gas containing $O_2$ from a fixed source in an economical and efficient manner by overcoming the above-mentioned defects of the conventional techniques under these circumstances.

The process of the present invention developed for the purpose of attaining the above-mentioned object is characterized in that a gas comprising $NO_x$, CO and $O_2$ is contacted with a catalyst in the presence of steam and ammonia to reduce $NO_x$ into harmless $N_2$ and also to react CO with $H_2O$ to convert them into $CO_2$ and $H_2$ over the same catalyst.

To carry out the reactions capable of attaining the above-mentioned purpose of the invention, a catalyst effective for the reactions of $NO_x$ with $NH_3$ as shown in the following formulae (1) and (2) and the reaction of CO with $H_2O$ as shown in the following formula (3) is necessitated:

$$NO + NH_3 + \frac{1}{4} O_2 = N_2 + \frac{3}{2} H_2O \tag{1}$$

$$3NO_2 + 4NH_3 = \frac{7}{2} N_2 + 6H_2O \tag{2}$$

$$CO + H_2O = CO_2 + H_2 \tag{3}$$

A catalyst comprising the following components satisfies the above-mentioned conditions: titanium oxide as a main component, oxide of at least one metal selected from molybdenum, tungsten, vanadium, cerium, nickel, cobalt and manganese as the second component and at least one metal selected from noble metals, i.e. platinum, palladium, rhodium and ruthenium as the third component. Preferable components of the catalyst are titanium oxide as a main component, oxide of one metal selected from molybdenum, tungsten, vanadium and manganese as the second component, and platinum as the third component. Further, a catalyst including oxide of at least one metal selected from iron, chromium and copper in addition to the main component, the second component and third component is preferable.

Now, the description will be made on the reasons why this catalyst has the desired properties. Though a catalyst comprising the above-mentioned main component, i.e. titanium oxide, and also the above-mentioned second component, i.e. oxide(s) of molybdenum, tungsten, vanadium, cerium, nickel, cobalt and/or manganese, is remarkably effective on the denitration of the above formulae (1) and (2), its effect on the CO conversion of the above formula (3) is poor. However, when the above-mentioned third component, i.e. at least one of the above-mentioned noble metals is added to this catalyst, the effects of the catalyst on the CO conversion are improved.

3

According to the inventors' experiments, atomic percentages of the respective metal components to the total of metals of the main, second and third components are preferred as follows:

(a) up to 97% of titanium of the main component,
(b) 1 to 50% of the second component, and
(c) 0.02 to 5% of the noble metal used as the third component.

It is preferable to add, to the above-mentioned noble metal or metals, 1 to 20% of iron, chromium or copper as the additional third component in the form of their oxide, whereby the CO-conversion is further improved.

More than 50% of components of the catalyst preferably consists of the main component in the form of oxide, the second component, and the third component (optionally including the additional third component in the form of their oxide), as above-mentioned. Preferably, the catalyst is to be an intimate mixture of the main component in the form of oxide, the second component in the form of oxide and the third components.

The most preferable catalyst comprises titanium as the main component in the form of oxide; vanadium, manganese, tungsten or molybdenum as the second component in the form of oxide; and platinum as the third component. Atomic percentages of metal components included in the catalyst as the main, second and third components are as follows;

| | |
|---|---|
| Ti: 68—97% | main component |
| V, Mo, W, or Mn: 2—30% | second component |
| Pt: 0.02—2% | third component |

more than 50% by weight of this catalyst also consists of Ti; one of V, Mo, W, and Mn; and Pt. Preferably, they are in a state of an intimate mixture.

In the process of the present invention, $NO_x$ is converted into harmless $N_2$ and $H_2O$ as shown in the above formulae (1) and (2) and CO is converted into $CO_2$ and $H_2$ as shown in the above formula (3). Usually, $H_2$ is further reacted with $O_2$ over the caalyst to form $H_2O$. Therefore, when the gas to be treated contains $O_2$, usually only a very small amount of $H_2$ is contained in the gas after it is passed through the catalyst bed.

In the process of the present invention, the molar ratio of steam to carbon monoxide contained in the gas is preferably at least 5/1 prior to the contact thereof with the catalyst, since when the molar ratio is below 5/1, the reaction of the formula (3) does not proceed sufficiently and a high CO-removal rate cannot be obtained easily. The molar ratio of ammonia to $NO_x$ is preferably in the range of 0.5 to 2/1, since when this ratio is below 0.5/1, a high $NO_x$-removal rate cannot be obtained and when it exceeds 2/1, a large amount of unreacted $NH_3$ is discharged and, therefore, ammonia is required in a large amount economically disadvantageously.

The reaction temperature in the step of removing nitrogen oxides by the reduction and converting carbon monoxide in the process of the present invention is preferably selected in the range of 150 to 600°C, more preferably 250 to 400°C. When the reaction temperature is below 150°C, both of the denitration velocity and carbon monoxide conversion velocity may be insufficient and a large amount of the catalyst is necessitated economically disadvantageously, while when the reaction temperature exceeds 600°C, ammonia used as the reducing agent for $NO_x$ is oxidized into $NO_x$ to seriously reduce the $NO_x$-removal rate.

In the removal of $NO_x$ and CO from an exhaust gas by the process of the present invention, the space velocity (in terms of superficial velocity under conditions of NTP) is for example selected in the range of 1,000 to 100,000 $h^{-1}$, preferably 2,000 to 60,000 $h^{-1}$, since when the space velocity is below 1,000 $h^{-1}$, a large amount of the catalyst is necessitated ecomomically disadvantageously, while when it exceeds 100,000 $h^{-1}$, high $NO_x^-$ and CO-removal rates cannot be attained. The reaction column may be of any of known fixed, moving or fluidized bed systems.

The catalyst having quite a high capacity of removing $NO_x$ and CO can be obtained by a process employed usually in the production of catalysts such as precipitation, kneading or impregnation process. The catalyst may be molded into a final form by any process selected suitably depending on the use thereof such as ordinary extrusion, tableting or rolling process. The shape of the catalyst is not particularly limited and it may be globes, cylinders, rings, honey-combs or plates.

The titanium sources used in the reparation of the catalyst of the present invention include titanium oxides as well as compounds which form titanium oxides by heating, such as titanium hydroxides and titanic acids. A preferred process for preparing titanium oxides comprises reacting a titanium halide, titanium sulfate or organotitanium compound with aqueous ammonia or an alkali hydroxide or alkali carbonate to form a titanium hydroxide precipitate and then thermally decomposing it to form a corresponding titanium oxide.

The sources of molybdenum, vanadium, tungsten, cerium, nickel, cobalt and manganese used as the second component include oxides thereof and various compounds capable of forming these oxides by heating. In case hydroxides of these components can be prepared by adding an alkaline precipitating agent to an aqueous solution of its nitrate, sulfate or chloride, the obtained hydroxide can be thermally decomposed to obtain the second component.

4

As the starting materials for the noble metal used as the third component, chlorides, nitrates and complex salts of them can be used. The iron, chromium and copper sources include oxides of them as well as compounds which form these oxides by heating such as hydroxides, nitrates, chlorides and sulfates. A preferred process comprises adding an alkaline precipitating agent to an aqueous solution of such a salt to form a hydroxide and then thermally decomposing the same.

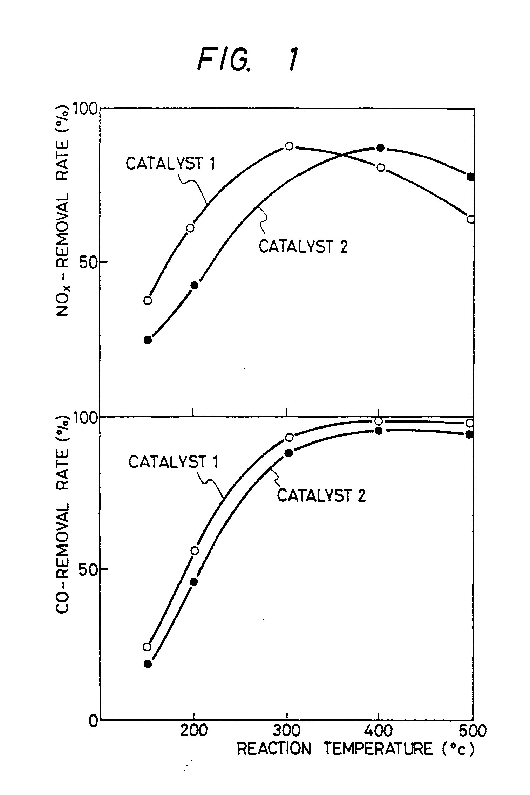

Fig. 1 is graphs showing $NO_x$-removal and CO-removal rates obtained by a process of removing $NO_x$ and CO simultaneously according to the present invention.

### Example 1

A catalyst used in the process of the present invention was prepared as follows:

500 g of titanium tetrachloride ($TiCl_4$) was dissolved in about 1 l of distilled water. It was then neutralized with about 2 l of 5 N aqueous ammonia to form a precipitate, which was washed thoroughly by decantation and filtered. A solution prepared by dissolving 54 g of ammonium paramolybdate in 500 ml of hot water was added to the precipitate and the mixture was kneaded well with a mixing machine. The obtained slurry was dried and further mixed thoroughly with graphite of 1 wt.% of the resultant substance and the mixture was molded into tablets having a diameter of 6 mm and a height of 6 mm. The tablets were calcined at 500°C for 2 h. The oxide had an atomic ratio of titanium to molybdenum (Ti:Mo) of 9:1. The tablets were pulverized and 100 g of a 10- to 20-mesh fraction was taken and impregnated with 40 ml of an aqueous hexachloroplatinic acid solution. After drying at 120°C for 5 h followed by calcination at 500°C for 2 h, a catalyst 1 containing 0.5 wt.% of platinum was obtained.

The capacities of the catalyst for removing $NO_x$ and CO were determined by means of a flow reaction device of fixed bed type under atmospheric pressure. The reaction tube used was a quartz glass tube having an inner diameter of 20 mm and also having a thermocouple-protecting quartz tube having an outer diameter of 5 mm. The reaction tube was heated in an electric furnace and the temperature was measured with the thermocouple. About 4 ml of the above-mentioned, sized catalyst was placed in the center of the reaction tube and a reaction gas of the following composition was introduced therein at a space velocity of 60,000 h$^{-1}$:

$NO_x$: 200 ppm

$NH_3$: 240 ppm

CO: 1,000 ppm

$O_2$: 1%

$H_2O$: 10%

$N_2$: the balance

$NO_x$ was analyzed with a chemiluminescent $NO_x$ analyzer and CO was analyzed with a non-dispersion infrared CO analyzer.

The removal rates of $NO_x$ and CO were calculated according to the following formulae:

$$NO_x\text{-removal rate} = \left(1 - \frac{\text{outlet } NO_x}{\text{fed } NO_x}\right) \times 100 \ (\%)$$

$$CO\text{-removal rate} = \left(1 - \frac{\text{outlet CO}}{\text{fed CO}}\right) \times 100 \ (\%)$$

The capacities of the catalyst prepared in Example 1 are shown in Fig. 1. It is apparent from this figure that the catalyst 1 of the present invention is effective in removing both $NO_x$ and CO at a temperature of above 200°C.

### Example 2

A catalyst 2 was prepared in the same manner as in Example 1 except that ammonium paramolybdate was replaced with ammonium paratungstate. The catalyst contained titanium and tungsten in the form of their oxides and in an atomic ratio of Ti to W of 9:1 and it contained also 0.5 wt.%, based on the oxides, of platinum. The capacities of the catalyst 2 are shown in Fig. 1. It is apparent from this figure that, though its capacity of removing $NO_x$ is slightly lower than that of the catalyst 1 at low temperatures, it exhibits high $NO_x$- and CO-removal rates.

### Example 3

A catalyst 3 was prepared as follows:

7 g of ammonium metavanadate ($NH_4VO_3$) was added to 500 g of a metatitanic acid slurry (150 g of $TiO_2$). 500 ml of distilled water was added to the mixture and the obtained mixture was kneaded thoroughly with a kneader. The obtained pasty mixture was pre-calcined at 300°C for 2 h. 1 wt.% of graphite was added thereto and the mixture was molded into tablets having a diameter of 6 mm and a height of 6 mm under a molding pressure of about 500 kg/cm². The tablets were calcined at 500°C for 2 h. The oxide had an atomic ratio of titanium to vanadium (Ti:V) of 97:3. The tablets were pulverized and 100 g of 10- to 20-mesh fraction was taken and impregnated with 40 ml of an aqueous hexachloroplatinic acid solution. After drying at 120°C for 5 h followed by calcination at 500°C for 2 h, the catalyst 3 containing 0.5 wt.% of platinum was obtained. The capacities of the catalyst 3 are shown in Table 1.

Table 1

| | Reaction temperature (°C) | | | | | |
|---|---|---|---|---|---|---|
| | 200 | 250 | 300 | 400 | 500 | 600 |
| $NO_x$-removal rate (%) | 72 | 82 | 91 | 82 | 54 | 31 |
| CO-removal rate (%) | 50 | 83 | 90 | 98 | 99 | 97 |

### Example 4

A catalyst 4 was prepared in the same manner as in Example 1 except that hexachloroplatinic acid was replaced with palladium nitrate. The catalyst contained titanium and molybdenum in the form of their oxides and in an atomic ratio of Ti to Mo of 9:1 and it further contained 0.5 wt.% of palladium. The capacities of the catalyst 4 determined in the same manner as in Example 1 are shown in Table 2.

Table 2

| | Reaction temperature (°C) | | | | | |
|---|---|---|---|---|---|---|
| | 200 | 250 | 300 | 400 | 500 | 600 |
| $NO_x$-removal rate (%) | 58 | 80 | 86 | 90 | 73 | 50 |
| CO-removal rate (%) | 53 | 81 | 92 | 99 | 99 | 98 |

### Example 5

A catalyst 5 was prepared in the same manner as in Example 1 except that hexachloroplatinic acid was replaced with rhodium chloride. The catalyst contained titanium and molybdenum in the form of their oxides and in an atomic ratio of Ti to Mo of 9:1 and it further contained 0.5 wt.% of rhodium. The capacities of the catalyst 5 determined in the same manner as in Example 1 are shown in Table 3.

Table 3

| | Reaction temperature (°C) | | | | | |
|---|---|---|---|---|---|---|
| | 200 | 250 | 300 | 400 | 500 | 600 |
| $NO_x$-removal rate (%) | 52 | 81 | 86 | 81 | 66 | 51 |
| CO-removal rate (%) | 41 | 82 | 87 | 91 | 98 | 97 |

### Example 6

A catalyst 6 was prepared in the same manner as in Example 1 except that hexachloroplatinic acid was replaced with ruthenium chloride. The catalyst contained titanium and molybdenum in the form of their oxides and in an atomic ratio of Ti to Mo of 9:1 and it further contained 0.5 wt.% of ruthenium. The capacities of the catalyst 6 determined in the same manner as in Example 1 are shown in Table 4.

Table 4

|  | Reaction temperature (°C) | | | | | |
|---|---|---|---|---|---|---|
|  | 200 | 250 | 300 | 400 | 500 | 600 |
| NO$_x$-removal rate (%) | 60 | 80 | 88 | 90 | 71 | 52 |
| CO-removal rate (%) | 51 | 81 | 90 | 96 | 97 | 95 |

Comparative Example 1

A platinum-free titanium oxide/molybdenum oxide catalyst (atomic ratio of Ti to Mo = 9:1) (comparative catalyst 1) was prepared in the same manner as in Example 1. The capacities of the catalyst were determined in the same manner as in Example 1. The results are shown in Table 5.

Table 5

|  | Reaction temperature (°C) | | | | |
|---|---|---|---|---|---|
|  | 200 | 300 | 400 | 500 | 600 |
| NO$_x$-removal rate (%) | 21 | 62 | 94 | 91 | 62 |
| CO-removal rate (%) | 2 | 7 | 15 | 28 | 48 |

It is apparent from this table that the comparative catalyst 1 had only a poor CO-removal capacity, though its NO$_x$-removal capacity was high.

Comparative Example 2

5 ml of an aqueous hexachloroplatinic acid solution (10 g Pt/100 g solution) was diluted with distilled water to obtain 70 ml of a solution. 100 g of active alumina carrier pulverized into a 10- to 20-mesh size was impregnated with the solution, dried at 120°C for 2 h and calcined at 500°C for 2 h. The catalyst contained 0.5 wt.% of platinum carried thereon. The capacities of the catalyst were determined in the same manner as in Example 1 to obtain the results shown in Table 6.

Table 6

|  | Reaction temperature (°C) | | | | |
|---|---|---|---|---|---|
|  | 200 | 300 | 400 | 500 | 600 |
| NO$_x$-removal rate (%) | 81 | 48 | 12 | – | – |
| CO-removal rate (%) | 68 | 92 | 99 | 99 | 99 |

It is apparent from this table that the comparative catalyst 2 had only a poor NO$_x$-removal capacity, though its CO-removal capacity was high.

**Claims**

1. A process for removing nitrogen oxides and carbon monoxide simultaneously from a gas including nitrogen oxides, carbon monoxide and oxygen characterized in that the gas is contacted with a catalyst in the presence of steam and ammonia at a temperature of 150—600°C to remove the nitrogen oxides by reaction with ammonia and to remove carbon monoxide by reaction with steam, said catalyst comprising titanium as a main component in the form of oxide, at least one metal selected from molybdenum, tungsten, vanadium, cerium, nickel, cobalt and manganese as a second component in the form of oxide and at least one metal selected from platinum, palladium, rhodium and ruthenium as a third component.

2. A process according to claim 1, wherein said catalyst further includes oxide of at least one metal selected from iron, chronium and copper as a fourth component.

3. A process according to claim 1, wherein said main, second and third components of said catalyst are, by atomic ratio, up to 97%, 1 to 50% and 0.02 to 5%, respectively, and more than 50% by weight of said

7

catalyst consists of said main and second components in oxide form and said third component.

4. A process according to claim 2, wherein said main, second, third and fourth components of said catalyst are by atomic ratio, up to 97%, 1 to 50%, 0.02 to 50% and 1 to 20%, respectively, and more than 50% by weight of said catalyst consists of said main, second, and fourth components in oxide form and said third component.

5. A process according to claim 1, 2, 3 or 4, wherein said main, second and third components are by atomic percentages, 68—97% of titanium, 2—30% of one metal selected from vanadium, molybdenum, tungsten and manganese, and 0.02—2% of platinum, respectively, and more than 50% by weight of said catalyst consists of said main and second components in oxide form and said third component.

6. A process according to claim 5, wherein said gas is contacted with said catalyst at a temperature of 250—400°C, at a space velocity of 1,000/100,000/hour.

7. A process according to claim 6, wherein the molar ratio of the steam to carbon monoxide contained in the mixture of nitrogen oxides, carbon monoxide and oxygen is at least 5 and the molar ratio of ammonia to the nitrogen oxides is 0.5 to 2 prior to the reactions.

8. A process according to claim 1 or 3, wherein said catalyst is produced by forming an intimate mixture of a titanium compound and said second component, calcining the mixture, adding to the calcined mixture a solution including said third component, and then drying and calcining the mixture.

## Patentansprüche

1. Verfahren zur gleichzeitigen Entfernung von Stickstoffoxiden und Kohlenmonoxid aus einem Gas, das Stickstoffoxide, Kohlenmonoxid und Sauerstoff enthält, dadurch gekennzeichnet, daß das Gas mit einem Katalysator in Gegenwart von Wasserdampf und Ammoniak bei einer Temperatur von 150—600°C in Berührung gebracht wird, um die Stickstoffoxide durch Umsetzung mit Ammoniak und das Kohlenmonoxid durch Umsetzung mit Wasserdampf zu entfernen, wobei der genannte Katalysator als Hauptbestandteil Titan in Form von Oxid, wenigstens ein Metall, das aus Molybdän, Wolfram, Vanadium, Cer, Nickel, Kobalt und Mangan gewählt ist, als zweiten Bestandteil in Form von Oxid und wenigstens ein Metall, das aus Platin, Palladium, Rhodium and Ruthenium gewählt ist, als dritten Bestandteil enthält.

2. Verfahren nach Anspruch 1, worin der genannte Katalysator weiters ein Oxid wenigstens eines Metalls, das aus Eisen, Chrom und Kupfer gewählt ist, als vierten Bestandteil enthält.

3. Verfahren nach Anspruch 1, worin der genannte Hauptbestandteil, zweite und dritte Bestandteil des genannten Katalysators jeweils ein Atomverhältnis von bis zu 97%, 1 bis 50% und 0,02 bis 5% aufweist und mehr als 50 Gew.-% des genannten Katalysators aus dem genannten Hauptbestandteil und zweiten Bestandteil in Oxidform und dem genannten dritten Bestandteil bestehen.

4. Verfahren nach Anspruch 2, worin der genannte Hauptbestandteil, zweite, dritte und vierte Bestandteil des genannten Katalysators jeweils ein Atomverhältnis von bis zu 97%, 1 bis 50%, 0,02 bis 50% und 1 bis 20% aufweist und mehr als 50 Gew.-% des genannten Katalysators aus dem genannten Hauptbestandteil, zweiten und vierten Bestandteil in Oxidform und dem genannten dritten Bestandteil bestehen.

5. Verfahren nach Anspruch 1, 2, 3 oder 4, worin der genannte Hauptbestandteil, zweite und dritte Bestandteil in Atomprozentsätzen jeweils 68—97% Titan, 2—30% eines Metalls, das aus Vanadium, Molybdän, Wolfram, Mangan und 0,02—2% Platin gewählt ist, betragen und mehr als 50 Gew.-% des genannten Katalysators aus dem genannten Hauptbestandteil und zweiten Bestandteil in Oxidform und dem genannten dritten Bestandteil bestehen.

6. Verfahren nach Anspruch 5, worin das genannte Gas mit dem genannten Katalysator bei einer Temperatur von 250—400°C und einer Raumgeschwindigkeit von 1.000—100.000/Stunde in Berührung gebracht wird.

7. Verfahren nach Anspruch 6, worin das Molverhältnis des Wasserdampfs zu Kohlenmonoxid, das im Gemisch von Stickstoffoxiden, Kohlenmonoxid und Sauerstoff enthalten ist, wenigstens gleich 5 ist und das Molverhältnis von Ammoniak zu den Stickstoffoxiden vor den Reaktionen 0,5 bis 2 beträgt.

8. Verfahren nach Anspruch 1 oder 3, worin der genannte Katalysator durch Bildung eines innigen Gemisches einer Titanverbindung und des genannten zweiten Bestandteils, Kalzinieren der Mischung, Zugabe einer Lösung, die den erwähnten dritten Bestandteil enthält, zur kalzinierten Mischung und darauffolgendes Trocknen und Kalzinieren der Mischung erhalten wird.

## Revendications

1. Procédé pour éliminer les oxydes d'azote et le monoxyde de carbone simultanément d'un gaz comprenant des oxydes d'azote, du monoxyde de carbone et de l'oxygène, caractérisé en ce que le gaz est mis en contact avec un catalyseur en présence de vapeur d'eau et d'ammoniac à une température de 150 à 600°C pour éliminer les oxydes d'azote par réaction avec l'ammoniac et pour éliminer le monoxyde de carbone par réaction avec la vapeur d'eau, ledit catalyseur comprenant du titane comme composant principal sous forme d'oxyde, au moins un métal choisi parmi le molybdène, le tungstène, le vanadium, le cérium, le nickel, le cobalt et le manganèse comme second composant sous forme d'oxyde et au moins un métal choisi parmi le platine, le palladium, le rhodium et le ruthenium comme troisième composant.

2. Procédé selon la revendication 1, dans lequel ledit catalyseur comprend de plus un oxyde d'au moins un métal choisi parmi le fer, le chrome et le cuivre comme quatrième composant.

3. Procédé selon la revendication 1, dans lequel ledit composant principal et lesdits second et troisième composants dudit catalyseur sont présents dans des proportions atomiques respectives d'au maximum 97%, de 1 à 50% et de 0,02 à 5%, et plus de 50% du poids dudit catalyseur sont constitués dudit composant principal et dudit second composant sous forme d'oxydes et dudit troisième composant.

4. Procédé selon la revendication 2, dans lequel ledit composant principal et lesdits second, troisième et quatrième composants dudit catalyseur sont présents dans des proportions atomiques respectives d'au maximum 97%, de 1 à 50%, de 0,02 à 50% et de 1 à 20%, et plus de 50% du poids dudit catalyseur sont constitués dudit composant principal et desdits second et quatrième composants sous forme d'oxydes et dutit troisième composant.

5. Procédé selon la revendication 1, 2, 3 ou 4, dans lequel ledit composant principal et lesdits second et troisième composants sont présents dans les proportions atomiques respectives de 68 à 97% de titane, de 2 à 30% d'un métal choisi parmi le vanadium, le molybdène, le tungstène et le manganèse, et de 0,02 à 2% platine, et plus de 50% en poids dudit catalyseur sont constitués dudit composant principal et dudit second composant sous forme d'oxydes et du troisième composant.

6. Procédé selon la revendication 5, dans lequel ledit gaz est mis en contact avec ledit catalyseur à une température de 250 à 400°C à une vitesse spatiale de 1 000 à 100 000/h.

7. Procédé selon la revendication 6, dans lequel ledit le rapport molaire de la vapeur d'eau au monoxyde de carbone contenu dans le mélange d'oxydes d'azote, de monoxyde de carbone et d'oxygène est d'au moins 5 et le rapport molaire de l'ammoniac aux oxydes d'azote est de 0,5 à 2 avant les réactions.

8. Procédé selon la revendication 1 ou 3, dans lequel ledit catalyseur est produit par formation d'un mélange intime d'un composé de titane et dudit second composant, calcination du mélange addition au mélange calciné d'une solution comprenant ledit troisième composant, puis séchage et calcination du mélange.

## FIG. 1